# EUROPEAN PATENT APPLICATION

(11) **EP 4 803 309 A1**
(43) Date of publication of application: **09.09.2026**
(21) Application number: 25161365.9
(22) Date of filing: 03.03.2025
(51) Int. Cl.: B32B 29/02, B32B 5/02, B32B 5/08, B32B 7/02, B32B 7/023, B32B 7/12

(54) **HEAT SEALABLE LAMINATE AND METHOD OF PRODUCING A HEAT SEALABLE LAMINATE**

(71) Applicant: Ahlstrom Oyj, 02150 Espoo (FI)
(72) Inventor: Cartier, Noel, 38200 Jardin (FR); Blanc, Patrice, 07100 Boulieu-lès-Annonay (FR); Planchard, Hervé, 56950 Crach (FR); Paquet, Olivier, 38200 Jardin (FR); Chanabat, Isabelle, 38150 Vernioz (FR)
(74) Representative: Hoffmann Eitle

(57) **Abstract**

A heat sealable laminate comprises a substrate comprising cellulose fibers, preferably a paper, and a fibrous web comprising thermoplastic polymer fibers. The web is arranged on the substrate, and in at least one treated region of the web, the web has been heated and compressed; wherein the heated and compressed web has a void ratio of 10 % or more and 80 % or less, preferably of 20 % or more and 75 % or less, more preferably of 30 % or more and 70 % or less. A method of producing a heat sealable laminate comprises preparing a substrate comprising cellulose fibers, preferably a paper, preparing a fibrous web comprising thermoplastic polymer fibers, the web preferably being a non-woven web, more preferably being a spunbond non-woven web, placing the web on the substrate, and applying heat and pressure to the web. Heat and pressure are applied to the web, so as to increase the transparency of the web.

## Description

### TECHNICAL FIELD

The present disclosure relates to a heat sealable laminate and a method of producing a heat sealable laminate.

### PRIOR ART

In the paper and packaging industry, there is a wide range of applications for materials that are designed as laminates comprising a substrate and a layer made from another material laminated onto said substrate. These include, in particular, heat-sealable laminates, in which the substrate essentially provides the laminate with its strength, and the coating, usually in the form of a thermoplastic, provides the heat-sealing property. Such heat sealable laminates are frequently used in the packaging of foods and beverages, such as in beverage cartons, tea bags, the packaging of loose fruit such as berries, but also in the packaging of products such as sports equipment or similar products. It can be desired that such laminates have a certain degree of transparency in order to make the content of the packaging visible.

Conventionally, the laminates are manufactured by laminating an extruded film made of a thermoplastic polymer, typically polyesters like polyethylene terephthalate (PET), onto a substrate material. Such conventional laminates are known, for example, from WO 2008 092 328 A1 and US 9,393,763 B2. One main disadvantage of such conventional laminates is a lack of air permeability thereof. In some applications, a controlled air permeability of the laminate is desired. Providing said films with a controlled air permeability is cumbersome and requires an additional processing step, as described in US 3,880,966 A, for example. Furthermore, in the recent past, the sustainability requirements of packaging materials have increased, so it is preferable to use a packaging material that is recyclable, is made from renewable resources, is biodegradable and/or is compostable.

Hence, it is an object of the present invention to provide a heat sealable laminate having a certain transparency, air permeability and is environmentally friendly.

### SUMMARY OF THE INVENTION

The above object is solved by a heat sealable laminate according to claim 1 and by a method of producing a heat sealable laminate according to claim 9. Further preferred embodiments are set out in the dependent claims.

The present invention provides a heat sealable laminate comprising a substrate comprising cellulose fibers, preferably a paper, and a fibrous web comprising thermoplastic polymer fibers. The web is arranged on the substrate. In at least one treated region of the web, the web has been heated and compressed. The treated region of the web has a void ratio of 10 % or more and 80 % or less, preferably of 20 % or more and 75 % or less, more preferably of 30 % or more and 70 % or less.

The void ratio as used in the present disclosure is a measure of the amount of voids in the treated region of the web and is calculated by the following formula: $vr \left[%\right] = \frac{{ρ}_{polymer} - {ρ}_{web , h + c}}{{ρ}_{polymer}} \times 100 % = 1 - \frac{{ρ}_{web , h + c}}{{ρ}_{polymer}} \times 100 %$

In Formula 1, ρ_{polymer} is the density (mass per volume) of the pure thermoplastic polymer which is a material property that can be taken from the material data sheet or can be determined in the literature. In other words, ρ_{polymer} relates to the density of the polymer itself without any air inclusions or voids. ρ_{web,h+c} is the density of the treated region of the web, i.e. the heated and compressed fibrous web, also called bulk density or apparent density, and can be determined by dividing the mass of the heated and compressed web by the total volume the heated and compressed web occupies, also called bulk volume.

If the fibrous web comprises thermoplastic polymer fibers of more than one type of polymer, the density of each polymer type is considered for the determination of ρ_{polymer} by weighting the arithmetic mean according to the respective mass ratio of the polymer type in the fibrous web.

By heating and compressing the fibrous web comprising thermoplastic polymer fibers, the transparency of the fibrous web can be increased and hence also a transparency of a portion of the web can be increased, in which the heated and compressed web and the substrate overlap. Furthermore, by using a heated and compressed fibrous web rather than an extruded film, a porosity in the resulting thermoplastic layer on the substrate can be achieved, which allows for a certain air permeability thereof. The substrate comprising cellulose fibers essentially provides the laminate with its strength, i.e. increases the tear resistance of the laminate. Setting the void ratio as described has the technical effect, that a desired air permeability of the material can be achieved.

In a preferred embodiment, a proportion of thermoplastic polymer fibers by weight of all fibers of the web is at least 80 %, preferably at least 90 %, more preferably at least 99 %.

The more fibers in the fibrous web are made of thermoplastic polymers, the more uniform the resulting thermoplastic layer on the substrate will be when the web is heated and compressed. It may be preferred that all fibers in the web, except for negligible impurities, are made of thermoplastic polymers.

In a preferred embodiment, the thermoplastic polymer fibers are thermoplastic bio-sourced polymer fibers. It is even more preferred that the thermoplastic bio-sourced polymer fibers are one or more of Polylactic Acid (PLA) fibers, Polyhydroxyalkanoate (PHA) fibers and Polyhydroxybutyrate (PHB) fibers.

The term bio-sourced polymer as used in the present disclosure refers to a polymer the monomers of which can be derived or obtained from molecules that are producible by the cells of living organisms. The fibrous web may contain fibers of only one type of polymer, preferably one type of bio-sourced polymer; or the fibrous web may contain a blend of fibers, i.e. fibers of different kinds of polymers, preferably different kinds of bio-sourced polymers.

Using thermoplastic bio-sourced polymer fibers in the fibrous web has the technical effect that the laminate can be more sustainable because bio-sourced polymers are renewable raw materials rather than fossil ones being based on petroleum. Furthermore, depending on the choice of bio-sourced polymer, the web can be biodegradable and even compostable. When using PLA fibers, PHA fibers and/or PHB fibers, for example, the web can be biodegradable and/or compostable, for example according to standard EN 13432.

In a preferred embodiment, the web is a non-woven web, preferably a spunbond non-woven web.

Providing the web as a non-woven web, preferably a spunbond non-woven web has the technical effect that the web can be produced in a continuous process of spinning and dispersing fibers, and thereby in a cost-efficient manner.

In a preferred embodiment, an adhesive or an adhesion promoter is disposed between the web and the substrate.

Providing an adhesive or adhesion promoter between the web and the substrate has the technical effect of increasing the adhesion between the substrate and the heated and compressed web. While the original adhesion between the substrate and the heated and compressed web may depend on the type of substrate and the type of polymer used, using an adhesive or an adhesion promoter can ensure that a sufficiently high level of adhesion is created between the substrate and the heated and compressed web, even if the original adhesion is low.

In a preferred embodiment, the substrate has a transparency of at least 50 %, preferably at least 55 %, more preferably at least 60 %, even more preferably of at least 70 %, still more preferably of at least 75 %, most preferably of at least 80 %.

Throughout the present disclosure, all transparency measurements were carried out according to the standard DIN 53147:1993-01 using a test equipment model BCMTS M Type 40605, with Touchscreen M software of the company Frank-PTI. This test equipment uses a Konica Minolta CM-3630 Spectrophotometer.

Providing the substrate with a high level of transparency makes it possible to obtain a laminate with a high level of transparency as well.

In a preferred embodiment, the laminate has in a region in which the treated region of the web and the substrate overlap a transparency of at least 50 %, preferably at least 55 %, more preferably at least 60 %, even more preferably at least 70%, still more preferably at least 75 %, most preferably at least 80 %.

According to some specific embodiments of the present invention, a further increase in transparency compared to the substrate can be achieved with the inventive laminate. Due to the treated region forming an interface at the surface of the substrate that is less anisotropic, so the treated region allows to reduce light scattering.

Providing the laminate with a high level of transparency makes it possible to use the laminate for applications in which, for example, the inside of a package is to be visible from the outside. The transparency of the laminate can be influenced by both the transparency of the substrate and the transparency of the heated and compressed web.

In a preferred embodiment, said region of the laminate in which the treated region of the web and the substrate overlap is a contiguous area that has a size of at least 0.5 cm², preferably at least 1 cm², more preferably at least 2 cm², even more preferably at least 5 cm².

Thus, the region of the laminate in which the treated region of the web and the substrate overlap is not just one or more dot- or line-like areas that serve merely to attach the web to the substrate, but said region is a contiguous area that is large enough to be a functional surface with increased transparency and/or defined air permeability.

The present invention further provides a method of producing a heat sealable laminate, preferably the heat sealable laminates named above. The method comprises preparing a substrate comprising cellulose fibers, preferably a paper, preparing a fibrous web comprising thermoplastic polymer fibers, placing the web on the substrate, and applying heat and pressure to the web. Preferably, the web is a non-woven web, more preferably a spunbond non-woven web. Heat and pressure are applied to the web, so as to increase the transparency of the web.

Using a substrate comprising cellulose fibers contributes greatly to the strength of the laminate, i.e. increases the tear resistance of the laminate. Using a fibrous web comprising thermoplastic polymer fibers for obtaining the heat sealable laminate makes it possible to provide the heated and compressed web with a porosity or void ratio allowing for a certain air permeability without the need for an extra process step of perforating the laminate. The resulting air permeability can be selectively chosen by adapting the process parameter, in particular the applied heat and pressure. By applying heat and pressure to the web, the transparency of the web can be increased, and the air permeability can be selectively lowered. Using a web which is a non-woven web, preferably a spunbond non-woven web, has the technical effect that the web can be produced in a continuous process of spinning and dispersing fibers, and thereby in a cost-efficient manner.

In a preferred embodiment, a proportion of thermoplastic polymer fibers by weight of all fibers of the web is 80 % or more, preferably 90 % or more, more preferably 99 % or more. In addition, or alternatively, the thermoplastic polymer fibers are thermoplastic bio-sourced polymer fibers, which are preferably one or more of Polylactic Acid (PLA) fibers, Polyhydroxyalkanoate (PHA) fibers and Polyhydroxybutyrate (PHB) fibers.

It may be further preferred that all fibers in the web, except for negligible impurities, are made of thermoplastic bio-sourced polymers.

The more fibers in the fibrous web are made of thermoplastic polymers, the more uniform the resulting thermoplastic layer on the substrate will be when the web is heated and compressed. Using thermoplastic bio-sourced polymer fibers as the thermoplastic polymer fibers makes it possible to obtain a heated and compressed web of the laminate which is more sustainable because bio-sourced polymers are renewable raw materials rather than fossil ones. Furthermore, depending on the choice of bio-sourced polymer, the web can be biodegradable and even compostable. When using PLA fibers, PHA fibers and/or PHB fibers, for example, the web can be biodegradable and compostable. For example, the bio-sourced polymer may be made biodegradable according to standard EN 13432.

In a preferred embodiment, the web is fused to the substrate by applying the heat and the pressure to the web. In addition, or alternatively, the web is attached to the substrate by use of an adhesive or an adhesion promoter.

Fusing the web to the substrate only by applying the heat and the pressure to the web has the advantage that an additional step of adhering the web to the substrate can be saved. If all thermoplastic polymer fibers of the web are thermoplastic bio-sourced polymer fibers, fusing the web to the substrate by applying the heat and the pressure to the web may make it easier to obtain a sustainable laminate, because due to a lack of additional adhesive, the sustainability thereof does not need to be taken into account. Without using an additional adhesive or an adhesion promoter, the adhesion between the substrate and the heated and compressed web may be less strong compared to when an additional adhesive or adhesion promoter is used. A less strong adhesion may be preferred to enable the web to be easily separated from the substrate, for example to be peeled off by hand. This has the advantage that separate disposal of the substrate and the heated and compressed web is facilitated. This is particularly advantageous if the web contains polymer fibers that are not bio-sourced polymer fibers or if the substrate is not biodegradable or compostable.

When an adhesive or an adhesion promoter is used alternatively or in addition, the adhesive or the adhesion promoter can be applied to the substrate, e.g. by precoating the same, to the web, e.g. by impregnating the web, or to both, e.g. by spraying. Preferably, the adhesive or adhesion promoter is applied before the heat and the pressure are applied to the web. Using an adhesive or an adhesion promoter can strengthen the adhesion between the substrate and the heated and compressed web so that unintended detachment of the substrate and the heated and compressed web is avoided.

In a preferred embodiment, the heat is applied only from one side of the web. In addition, or alternatively, the heat is applied by means of a hot press, a calender or an ultrasonic horn.

The web may be heated in a state in which it is in contact with the substrate. If heat is only applied from one side of the web, the heat may be applied from the side of the web which is in contact with the substrate, or the heat may be applied from the side of the web which is not in contact with the substrate. It has been surprisingly found that by applying heat to only one side of the web, the transparency of the web can be increased without damaging the web, in particular without the web getting cracks or holes or shrinking. When using a hot press or a calender, the heat and the pressure can be applied simultaneously and formation of cracks or holes can be prevented. When using a calender, the web can be fused to the substrate at the end of a process of calendering the substrate. That is, by providing an additional pair of nip rollers, of which preferably one is heated, at the end of the calender which is processing the substrate, a separate device or process for fusing the web to the substrate can be omitted.

In a preferred embodiment, when applying the heat to the web, the web is heated from ambient temperature to a heating temperature within a heating time period of 0.5 seconds or more and 12 seconds or less, preferably of 1 second or more and 6 seconds or less. In addition, or alternatively, the method further comprises cooling the web, wherein the web is cooled from a heating temperature to ambient temperature within a cooling time period of 0.5 seconds or more and 120 seconds or less, preferably of 5 seconds or more and 100 seconds or less. In both cases, the heating temperature is at least as high as a melting temperature of the thermoplastic polymer fibers, preferably at least 5 C or more but not more than 20 °C above the melting temperature, more preferably at least 10 C or more but not more than 15 °C above the melting temperature.

In other words, the heating temperature preferably lies in an interval of 5 °C or more and 20 °C or less above the melting temperature of the thermoplastic polymer fibers. If more than one type of thermoplastic polymer fibers is used, the interval refers to the highest melting temperature of the different types of thermoplastic polymer fibers. The term ambient temperature as used in the present disclosure, refers to a temperature of 15 to 25 °C, preferably 18 to 22 °C, most preferably 20 °C. The ambient temperature as the starting temperature for heating or the target temperature for cooling does not have a particularly strong influence on the quality of the web with increased transparency, as long as the ambient temperature lies within said interval.

Surprisingly, it turned out that the speed at which the web is heated or cooled has an influence on whether the web's transparency can be increased to a desired level without causing the fibrous web to shrink or to get holes or cracks. With the above values, it is possible to increase the web's transparency while preventing it from shrinking, cracking or forming holes. Furthermore, when the web is fused to the substrate by applying the heat and the pressure to the web, the above parameters prevent the web from delaminating from the substrate when cooling down.

In a preferred embodiment, the web is brought in contact with a release surface having a non-stick coating prior to applying heat and pressure to the web, the non-stick coating preferably comprising Polytetrafluoroethylene (PTFE) and/or silicone.

The release surface can comprise a first release sheet in direct contact with the web so that the web is sandwiched between the substrate and the release sheet. Optionally, the release surface can comprise a second release sheet in direct contact with the substrate so that the web and the substrate are sandwiched between the first and second release sheets. This is preferred when using a hot press to apply heat to the web, for example. Alternatively, the release surface can be the surface of a nip roller. This is preferred when using a calender, for example.

Bringing the web into contact with a release surface facilitates preventing the formation of cracks or holes in the web or the shrinking thereof when increasing its transparency by applying the heat and the pressure to the web. If the release surface is a release sheet placed on top of the web, the release sheet can prevent the web from cooling down to quickly after applying heat to the web which may lead to shrinkage or the formation of holes and cracks in the web. In other words, a release sheet contacting the web can reduce the cooling rate of the web, preventing shrinking and the formation of holes and cracks in the web. Also, the use of a release sheet prevents the web from sticking to a surface from which heat is applied to the web.

The present invention further provides a use of the laminates described above for the fabrication of a packaging.

Using the laminates described above laminates for the fabrication of a packaging enables to obtain a packaging with a heat sealable laminate having an increased transparency and allowing for a certain air permeability.

### BRIEF DESCRIPTION OF THE DRAWINGS

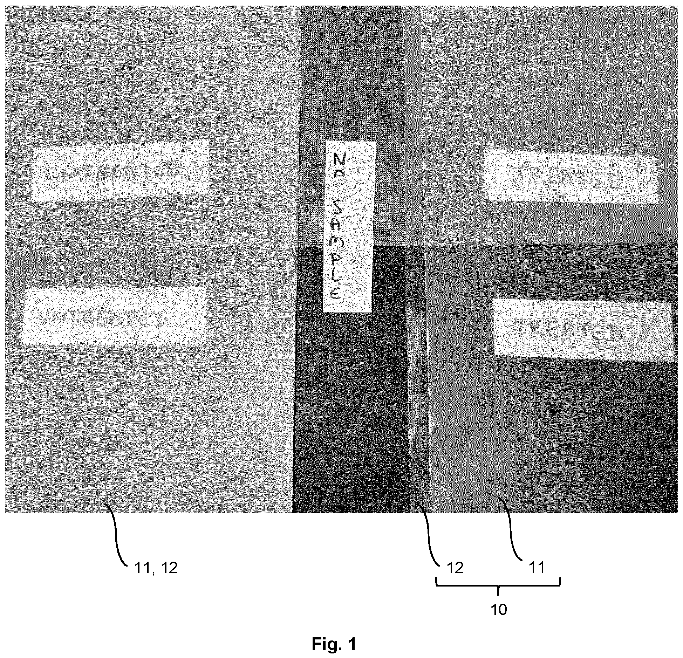

Fig. 1 is a photograph showing in the left half thereof a fibrous web made of PLA placed on a substrate made of paper and before it was heated and compressed to form a treated region, and in the right half thereof a laminate according to the present invention comprising a substrate and a fibrous web of which the fibrous web has been heated and compressed to form the treated region. A handwritten note is placed underneath both samples to illustrate the transparency of both samples.
Fig. 2a is a schematic representation of the arrangement of the substrate, the fibrous web and two release sheets when using a hot-press for applying heat and pressure to the web.
Fig. 2b is a schematic representation of the arrangement of the substrate, the fibrous web and one release sheet when using a hot-press for applying heat and pressure to the web.

### DETAILED DESCRIPTION OF PREFERRED EMBODIMENTS

Any identical reference signs listed in different figures denote identical, corresponding or functionally similar parts.

The substrate of the heat sealable laminate according to the present invention comprises cellulose fibers and is preferably a paper. The substrate is thus advantageously biodegradable and may also be compostable. More preferably, the paper is a high-transparency paper, such as a glassine paper, tracing paper or similar, i.e. a paper which is 100 % fiber based, recyclable and has a transparency of 60 % or more. The substrate comprising cellulose fibers inherently has a certain degree of air permeability. The substrate improves the strength of the laminate, particularly the tear resistance of the laminate. It is preferred that the substrate has a transparency of at least 50 %, preferably at least 55 %, more preferably at least 60 %, even more preferably of at least 70 %, still more preferably of at least 75 % and most preferably of at least 80 %. In exceptional cases, the substrate may have a transparency of at least 85 %. Such highly transparent substrate can be, for example, a supercalendered paper, sometimes called crystal or cristal paper.

The fibrous web of the heat sealable laminate according to the present invention comprises thermoplastic polymer fibers. It is preferred that a proportion of thermoplastic polymer fibers by weight of all fibers of the web is at least 80 %, preferably at least 90 %, more preferably at least 99 %. In other words, it may be preferred that all fibers in the web, except for negligible impurities, are made of thermoplastic polymers.

Thermoplastic polymers suitable to be used as thermoplastic polymer fibers in the fibrous web according to the present invention are Polyethylene Terephthalate (PET), Polymethyl Methacrylate (PMMA), Copolyester (Co-PET), Polyamides such as Nylon, Polyethylene (PE), Polyether Ether Ketone (PEEK) and Polypropylene (PP), for example. Preferably, the thermoplastic polymer fibers are thermoplastic bio-sourced polymer fibers. Bio-sourced polymers suitable to be used as thermoplastic bio-sourced polymer fibers in the fibrous web according to the present invention are Polylactic Acid (PLA), Polybutylene Succinate (PBS), Polybutylene Succinate Adipate (PBSA), Polyhydroxyalkanoates (PHA), Polyhydroxybutyrate (PHB), Polyvinyl Alcohol (PVOH), Poly(tetramethylene adipate-coterephthalate) (PTAT). It is preferred that the fibrous web is a non-woven web, preferably a spunbond non-woven web. If the fibrous web is a spundbond non-woven web, of the above-mentioned suitable polymers, it is preferred to use PET, Co-PET, Polyamides such as Nylon, PE or PP. Of the listed suitable bio-sourced polymers, it is preferred to use PLA.

It may be preferred that the treated region in which the fibrous web has been heated and compressed is fused directly onto the substrate. That is, the treated region adheres to the substrate without any adhesive or adhesion promoter disposed therebetween. This is possible due to the heat sealable property of the laminate and the fibrous web in particular. The term heat sealable as used in the present disclosure refers to a property that by applying heat, at least part of the object can be softened, preferably melted, and that after cooling, the object hardens again. In this way, the softened or molten part of the object can bond with another object. This property applies in particular to thermoplastic polymers. The configuration without an additional adhesive or an adhesion promoter has the advantage that it can be easier to make the substrate sustainable, because the sustainability of the adhesive or the adhesion promoter does not need to be considered. Furthermore, when no adhesive or adhesion promoter is used, the adhesion between the substrate and the treated region can be set to be low, thus facilitating the substrate and the treated region to be separated. In this regard, it can be desired, that a user is able to peel off the web from the substrate by hand to facilitate recycling. This is particularly relevant if one of the substrate or the web is not biodegradable or compostable and the substrate and the web should therefore be disposed separately.

In contrast, it may also be preferred that an adhesive or an adhesion promoter is disposed between the web and the substrate. That is, the web can be adhered to the substrate by means of an adhesive or an adhesion promoter before or after a region of the web has been heated and compressed to form the treated region. When an adhesive or adhesion promoter is used, the adhesion between the web and the substrate can be increased in order to prevent unwanted delamination, in particular when the initial adhesion between the substrate and the treated region, i.e. the web that has been heated and compressed, is low.

The laminate according to the present invention can have a web attached to both sides of the substrate or only to one side of the web.

When applying heat and pressure to the web to form the treated region, heat and pressure may be applied to the entire web, so that the entire web forms the treated region. In this case the web does not comprise any region which is not the treated region, i.e. to which the heat and the pressure have not been applied. Alternatively, heat and pressure may be applied only to portions of the web so that the web comprises at least one region which is the treated region and at least one region which is not the treated region. Throughout the present disclosure, it is preferred that if the web comprises a region which is not the treated region, the web has in this region which is not the treated region the same properties or at least essentially the same properties as the web had in the treated region before heat and pressure have been applied thereto to form the treated region. Therefore, throughout the present disclosure, if a feature relates to a "region which is not the treated region", this feature may also apply to the treated region of the web before heat and pressure have been applied thereto to form the treated region, even if the entire web forms the treated region. To avoid unnecessary repetition, the expression "region which is not the treated region" is therefore used.

By applying heat and pressure to the web, the transparency of the web can be increased. In some embodiments, before applying the pressure and the heat to the web to form the treated region, the web has a transparency of at least 50 %, preferably of at least 60%, more preferably of at least 65%. The treated region of the web, which is a region in which the web has been heated and compressed, can achieve that the laminate has, in a region in which the treated region and the substrate overlap, a transparency which is substantially as high as or even higher than the transparency of the substrate alone. In other words, the substrate's transparency does not necessarily set the upper limit of the transparency of the laminate. To the contrary, the treated region may form an interface at the surface of the substrate that is less anisotropic, so the treated region allows to reduce light scattering resulting in a transparency of the laminate than can be higher than the transparency of the substrate. For example, when the treated region of the web has a first transparency, the substrate has a second transparency, and a region where the treated region of the web and the substrate overlap has a third transparency, the third transparency may be higher than said first and second transparencies, for example at least 2% higher, preferably at least 3% higher. It is preferred that in a region of the laminate, in which the treated region of the web and the substrate overlap, the laminate has a transparency of at least 50 %, preferably at least 55 %, more preferably at least 60 %, even more preferably at least 70%, still more preferably at least 75 %, most preferably at least 80%. In exceptional cases, the laminate can have a transparency of at least 85% in the region of the laminate in which the treated region of the web and the substrate overlap.

For illustrative purposes, some test results of measuring the transparency of two samples of a laminate according to the present invention are shown below. Laminate samples 1 and 2 each comprising the spunbond non-woven web and a paper substrate listed in Table 1 and Table 2 following below. The spunbond non-woven web of the laminate samples 1 and 2 is made of Polylactic Acid (PLA) and while being in contact with the substrate has been heated to a heating temperature of 185 °C for sample 1 and of 190 °C for sample 2, and compressed at a pressure of 275 kPa for both samples.

**Table 1**

| | Spunbond non-woven web made of PLA fibers (before heating and compressing) | Paper substrate | Laminate (after heating and compressing without adhesive) - sample 1 | Laminate (after heating and compressing without adhesive) - sample 2 |
|---|---|---|---|---|
| Basis weight (g/m²) | 27 | 32 | 59 | 59 |
| Transparency (%) | 84.36 | 87.62 | 86.36 | 86.33 |

As can be seen in Table 1 above, by applying heat and pressure to the web, a laminate can be produced that is not limited in its transparency by the lower transparency of the spundbond non-woven web. This is because the transparency of the web can be increased by applying heat and pressure to it. Although not shown in the table, it is also possible to achieve a transparency of the laminate that is higher than the transparency of the substrate.

Heat and pressure can be applied to the entire web, so that the treated region of the web covers the entire web. In this way, large laminates with increased transparency can be manufactured. Alternatively, it may also be preferred that heat and pressure are applied only to certain regions of the web. In this regard, the resulting laminate has regions in which the treated region of the web and the substrate overlap, resulting in a region with increased transparency, and has regions in which a region of the web that is not the treated region and the substrate overlap, resulting in a region with lower transparency. While the fibrous web initially has a comparatively high strength, particularly tear resistance, applying heat and pressure to the web can cause its strength, particularly its tear resistance, to decrease. Thus, the treated region of the web may have a strength, particularly a tear resistance, which is lower than the strength, particularly the tear resistance, of the web in a region which is not the treated region. Consequently, when applying heat and pressure only to certain regions of the web, the resulting laminate will have regions of increased transparency but comparatively lower tear resistance and regions of lower transparency but comparatively higher tear resistance. A laminate which has a web having treated regions and regions which are not the treated regions can thus benefit from the regions of increased transparency while maintaining a tear resistance in the other regions which is sufficiently high to process the laminate in a roll-to-roll process, for example. Furthermore, regions of the web which are not the treated region, have a higher opacity and are therefore more suitable to serve as a surface for imprints such as logos, text or decoration.

Throughout the present disclosure, all tear resistance values relate to the standard ISO 1974:2012 and hence all tear resistance measurements were carried out according to the standard ISO 1974:2012.

It is preferred that in region of the web, which is not the treated region, the web has a tear resistance of at least 200 mN, preferably of at least 500 mN, more preferably of at least 800 mN. It is preferred that the substrate has a tear resistance of at least 100 mN, preferably 150 mN, more preferably of at least 160 mN. It is preferred that, when no adhesive or adhesion promoter is used, the laminate has a tear resistance of at least 150 mN, preferably at least 200 mN more preferably at least 250 mN.

For illustrative purposes, some test results of measuring the tear resistance of two samples of a laminate according to the present invention are shown below.

**Table 2**

| | Spunbond non-woven web made from PLA fibers (before heating and compressing) | Paper substrate | Laminate (after heating and compressing without adhesive) - sample 1 | Laminate (after heating and compressing without adhesive) - sample 2 |
|---|---|---|---|---|
| Basis weight (g/m²) | 27 | 32 | 59 | 59 |
| Tear resistance (mN) | 865.6 | 172.0 | 261.0 | 246.2 |

As can be seen in Table 2, the laminate has a higher tear resistance than the paper substrate alone. However, the tear resistance of the fibrous web before it is heated and compressed is significantly higher than that of the laminate. This explains why it can be advantageous to also provide regions in the laminate where the fibrous web has not been heated and compressed. Namely, that the high tear resistance in these regions can ensure good processability of the laminate.

The use of a fibrous web in the laminate has, in comparison to the use of an extruded film, as it is known from the prior art, the particular advantage that the air permeability of the laminate can be adjusted in a controlled and targeted manner. The term air permeability, as used in the present disclosure, refers to the measurement result of the determination of air permeability according to the standard ISO 9237:2005. The extruded film, as it is known from the prior art, is typically almost or completely impermeable for air. The fibrous web, on the other hand, inherently has a certain air permeability. When heat and pressure are applied to the fibrous web to form the treated region, the air permeability of the web in that region is reduced but may be maintained to some extent. This allows the air permeability in this area to be specifically adjusted. For example, by increasing either temperature, pressure or time, the air permeability of the treated region can be reduced. Incidentally, it may be possible to conclude that the treated region in the laminate originates from a fibrous web and not from an extruded film. For example, by observing under a microscope, void areas can be detected in the treated region which originate from voids in the structure of the fibrous web before applying heat thereto. Such voids originating from a fibrous web are typically irregular in size, shape and distribution, whereas voids obtained by perforating an extruded film, for example, are more regular at least in shape, and often also more regular in size and distribution as they are typically provided in patterns.

As a result of allowing the air permeability to be specifically adjusted in the treated region, laminates with different properties can be obtained in a targeted manner. For example, in one particular embodiment, a laminate can be obtained which has an air permeability which is negligible and/or close to zero, but which has a permeability to other gases such as oxygen, nitrogen and/or moisture vapor which is non-negligible. In another particular embodiment, a laminate can be obtained which has a permeability to both air and other gases which is negligible and/or close to zero. In yet another particular embodiment, a laminate can be obtained which has a permeability to air which is non-negligible. In other words, a laminate can be obtained which allows for a controlled air or gas permeability or which functions as an efficient barrier to air and/or gas.

The targeted adjustment of the permeability also results from the laminate's structure. In particular, the substrate comprising cellulose fibers and preferably being a paper can inherently have a certain air and/or gas permeability, although this air and/or gas permeability is usually comparatively low. The substrate's grammage can influence the substrate's permeability, wherein a comparatively high grammage can lead to a comparatively low permeability and a comparatively low grammage can lead to a comparatively high permeability. Furthermore, the fibrous web inherently has a certain air and/or gas permeability. For example, when considering just the web of the laminate, the web may, in a particular embodiment, comprise a region which is not the treated region. The web can have in the region which is not the treated region a first air permeability and in the treated region a second air permeability, wherein the second air permeability is 0.1 % or more and 90 % or less, preferably 0.5 % or more and 80 % or less, more preferably 1 % or more and 70 % or less, of the first air permeability. In practice, it may be difficult to measure the air permeability of the laminate's web once the web is laminated with the substrate. By applying heat to the web, the original permeability of the web can either be reduced or even completely removed in the treated region.

Generally, the air and/or gas permeability of the laminate is limited by the substrate or the web, depending on which has the lower air and/or gas permeability. In practice, if the air and/or gas permeability of the web is not reduced to be negligible or zero in the treated region, the substrate is often the part of the laminate which has the lower permeability. In other words, the substrate is often, but not always, the limiting factor of the laminate's permeability to air and/or gas. The substrate may comprise only rather small pores or even no open porosity and have a low air permeability or even a negligible permeability to air and only a permeability to other gases such as, but not limited to, oxygen, nitrogen and/or moisture vapor. For example, in the one particular embodiment, in which the laminate has an air permeability which is negligible and/or close to zero but has a permeability to other gases such as oxygen, nitrogen and/or moisture vapor which is non-negligible, the substrate may have an air permeability which is negligible and/or close to zero, but said substrate has also a non-negligible gas permeability. In the other particular embodiment, in which the laminate has a permeability to both air and other gases which is negligible and/or close to zero, the substrate may have an air and gas permeability which is negligible and/or close to zero. In the yet another particular embodiment, in which the laminate has a permeability to air which is non-negligible, the substrate may have a non-negligible air permeability.

In contrast to cases where the substrate is the limiting factor of the laminate's permeability, when the substrate used has a comparatively low grammage, for example a grammage of 25 g/m² or less, the initial air permeability of said substrate is comparatively high. By lamination of a web with highly reduced air permeability onto said low grammage substrate, a laminate having an air permeability lower than that of the substrate can be obtained without modifying the substrate itself. Such laminate can be used, for example, in fruits and legumes packaging.

Hence, by selecting both, the permeability of the substrate and the degree to which the web's permeability is reduced by applying heat thereto, the laminate's permeability to air and/or gas can selectively be adjusted. Thereby, a laminate with suitable permeability properties, heat-sealable properties as well at least one area with improved transparency can be obtained. These properties are of particular interest for packaging applications.

The substrate's air permeability can be measured according to standard ISO 9237:2005 or any other relevant test method for papers with low air permeability, for example ISO 5636-3:2013 et ISO 5636-5. The laminate's air permeability in a region in which the treated region and the substrate overlap can also be measured according to standard ISO 9237:2005 or any other relevant test method for papers with low air permeability, as the laminate will often have an air permeability in the region in which the substrate and the treated region of the web overlap which is in the same order of magnitude as that of the substrate alone.

The substrate and the laminate may have a permeability to gases other than air, such as a permeability to oxygen, a permeability to nitrogen and a permeability to moisture vapor. As to a permeability to gases other than air, the substrate's and the laminate's permeability to oxygen can be measured according to ASTM D3985, the substrate's and the laminate's permeability to nitrogen can be measured according to ISO 15105-1 and the substrate's and the laminate's permeability to moisture vapor can be measured according to ISO 2528. For example, the oxygen permeability of the substrate and/or of the laminate is preferably less than 2000 cc/m²/day, more preferably 1000 cc/m²/day, even more preferably less than 500, even more preferably less than 100 cc/m²/day, even more preferably less than 20 cc/m²/day. For example, the moisture vapor permeability of the substrate and/or of the laminate, usually called MVTR (Moisture Vapor Transmission Rate), is preferably less than 200 g/m²/day, more preferably 100 g/m²/day, even more preferably less than 50 g/m²/day, even more preferably less than 20 g/m²/day, even more preferably less than 10 g/m²/day.

Typically, in regions of the laminate in which the treated region of the web and the substrate overlap, the air permeability will be lower than in a region of the laminate in which a region of the web which is not the treated region and the substrate overlap.

The heated and compressed web, i.e. the treated region of the web, has a void ratio of 10 % or more and 80 % or less, preferably of 20 % or more and 75 % or less, more preferably of 30 % or more and 70 % or less. As described above, the void ratio is a measure of the amount of voids in the treated region, i.e. the heated and compressed web, and is calculated with Formula 1 stated above in the summary of the invention based on a ratio of the apparent density to the theoretical density of the polymer. For example, the density ρ_{polymer} of the bio-sourced polymer PLA is 1240 kg/m³ and can be taken from the product data sheet or determined in the literature. The values for the theoretical density ρ_{polymer} of the individual polymers on which the present disclosure is based are given in Table 3 below.

**Table 3**

| Polymer | Theoretical density ρ_{polymer} in kg/m³ |
|---|---|
| Copolyester (Co-PET) | 1200-1400 |
| Poly(tetramethylene adipate-coterephthalate) (PTAT) | 1220 |
| Nylon | 1060-1180 |
| Nylon 6 | 1130 |
| Nylon 66 | 1140 |
| Polybutylene Succinate (PBS) | 1260 |
| Polybutylene Succinate Adipate (PBSA) | 1230 |
| Polyether ether ketone (PEEK) | 1320 |
| Polyethylene (PE) | 959 |
| Polyethylene terephthalate (PET) | 1560 |
| Polyhydroxyalkanoate (PHA) | 1000-1300 |
| Polyhydroxybutyrate (PHB) | 1250 |
| Polylactic acid (PLA) | 1240 |
| Polymethyl methacrylate (PMMA) | 1185 |
| Polypropylene (PP) | 895 |
| Polyvinyl Alcohol (PVOH) | 1250 |

The value of the theoretical density of Copolyester depends on its chemical composition, as Copolyesters (Co-PET, or CoPET) are a polymer family with a range of densities. PTAT is one example, among others, of a Copolyester. The value of the theoretical density of Nylon depends on its chemical composition, as Nylons are a polymer family with a range of densities. Nylon 6 and Nylon 66 are two examples, among others, of Nylons. The exact value of the theoretical density of Polyhydroxyalkanoate (PHA) depends on its chemical composition, as Polyhydroxyalkanoates (PHAs) are a polymer family with a range of densities. PHB is one example, among others, of a PHA Polymer.

The apparent density ρ_{web,h+c} of the treated region, in which the fibrous web has been heated and compressed, can be measured in a sample and calculated according to the following formula: ${ρ}_{web , h + c} = \frac{m}{V} = \frac{m}{A \times t} = G \times \frac{1}{t}$

In Formula 2, m is the mass of the sample in kg, V ist the volume of the sample in m³, A is the area of the sample in m², t is the thickness of the sample in m and G is the basis weight in kg/m², also called Grammage, of the sample. If the Grammage of the fibrous web before heat and pressure has been applied thereto to form the treated region is known, the apparent density ρ_{web,h+c} can be calculated relatively easy by merely measuring the thickness of the treated region, for example according to the standard TAPPI/ANSI T 411 om-21.

Hence, if the apparent density of a test sample of the treated region of a fibrous web comprising only thermoplastic bio-sourced polymer fibers made from PLA is 630 kg/m³, for example, the resulting void ratio of the treated region is 49.19 %.

For illustrative purposes, the test results of measuring the thickness according to the standard TAPPI/ANSI T 411 om-21 and calculating the apparent density of one sample each of the treated region of a fibrous web made from two spunbond non-woven webs of different basis weight and produced according to the present invention but without a substrate are shown below in Table 4 along with the respective calculated void ratio. The spunbond non-woven webs of the samples 3 and 4 shown in Table 4 below are made of Polylactic Acid (PLA) and have been heated to a heating temperature of 180 °C and compressed at a pressure of 275 kPa.

**Table 4**

| | Spunbond non-woven web made of PLA fibers (before heating and compressing) - sample 3 | Spunbond non-woven web of from PLA fibers (before heating and compressing) - sample 4 | Treated region (after heating and compressing) - sample 3 | Treated region (after heating and compressing) - sample 4 |
|---|---|---|---|---|
| Basis weight G (g/m²) | 90 | 27 | 90 | 27 |
| Thickness t (µm) | 378.4 | 136.2 | 142.2 | 69.8 |
| Apparent Density ρ_{web,h+c} (kg/m³) | 237.8 | 198.2 | 632.9 | 386.8 |
| Void ratio vr (%) | 80.82 | 84.06 | 48.95 | 68.80 |

As can be seen in Table 4 above, spunbond non-woven webs made of PLA fibers of two different basis weights were tested as sample 3 and 4. By applying heat and pressure to the web, the initial void ratio of the spunbond non-woven webs is lowered but nevertheless maintained to some extent. The void ratio is a prerequisite for the treated region's permeability to air. In other words, according to the invention, the transparency of the tested samples of spunbond non-woven webs was increased, while the void ratio thereof was reduced in a controlled manner, so that a certain amount of voids remained in the treated region allowing for a permeability to air.

As stated above, there is a certain correlation between the air permeability and the porosity or void ratio of the fibrous web, but they are not necessarily the same. A certain number of voids is a prerequisite for air permeability. However, the exact arrangement and size of these voids determines how permeable the fibrous web is to air. The fibrous web is inherently permeable to air and has a certain porosity or void ratio. By applying heat and pressure to the web, this air or gas permeability is reduced, but it is intended and preferred to maintain a certain air permeability.

According to the present invention, a laminate, preferably the laminate described above, can be produced by preparing a substrate comprising cellulose fibers, preferably a paper; preparing a fibrous web comprising thermoplastic polymer fibers, the web preferably being a non-woven web, more preferably being a spunbond non-woven web; placing the web on the substrate and applying heat and pressure to the web; wherein heat and pressure are applied to the web so as to increase the transparency of the web. The features and properties described above with regard to the laminate also apply to the method of producing a heat sealable laminate. They are not described again for the sole reason of avoiding unnecessary repetition and to improve the comprehensibility of the present disclosure. For example, it may be preferred that all fibers in the web, except for negligible impurities, are made of thermoplastic polymers. Likewise, it may be preferred that the thermoplastic polymer fibers are thermoplastic bio-sourced polymer fibers, as mentioned above.

In the method of producing a heat sealable laminate, when heat is applied to the web for forming the treated region, it is preferred that heat is applied only from one side of the web. In this regard, heat may be applied from that side of the web which is not in contact with the substrate, so that the heat does not need to pass through the substrate, or heat may be applied from that side of the web which is in contact with substrate so that the heat passes through the substrate and the web is not heated too fast. However, heat may also be applied from both sides of the web. It may be preferred that heat is applied by means of a hot press or a calender or an ultrasonic horn. When heat is applied by means of a hot press, it may thus be preferred that only one surface of the two surfaces of a hot press is heated. Similarly, when heat is applied by means of a calender, it may thus be preferred that only one nip roller of a pair of nip rollers is heated. Before and/or while applying heat to the web, it is preferred that the web is brought into contact with a release surface having a non-stick coating. The non-stick coating preferably comprises Polytetrafluoroethylene (PTFE) and/or silicone.

The laminate can be produced in a plurality of ways. It can be produced in a discontinuous process, in a continuous process or, as kind of a hybrid of the two, in a stop-and-go process.

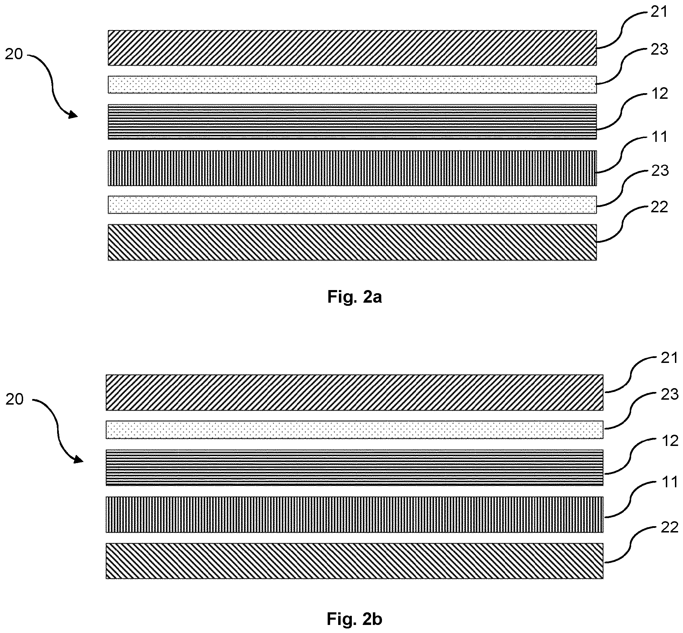

If the laminate 10 is manufactured in a discontinuous process, the laminate can be manufactured in a hot press, for example. This may be done by positioning the web 12 on the substrate 11 and bringing the web into contact with a release surface, which is preferably a release sheet in direct contact with the web, and placing the substrate on one of the two surfaces of the hot press. The release sheet is preferably interposed between the web and a surface of the hot press which is heated and from which heat is applied to the web. This arrangement is shown in Fig. 2a and Fig. 2b, for example. In Fig. 2a, the substrate 11 is arranged on a non-heated surface 22 of the hot press 20 with a release sheet 23 interposed therebetween. The fibrous web 12 is arranged on top of the substrate 11. A heated surface 21 of the hot press 20 comes into non-direct contact with the fibrous web 12 by having a release sheet 23 interposed between the heated surface 21 and the fibrous web 12. As shown in Fig. 2b, when using a hot press for applying pressure and heat to the substrate, the release sheet 23 interposed between the non-heated surface 22 and the substrate 11 can also be omitted. As a next step, the other of the two surfaces of the hot press is brought into non-direct contact with the web and pressure and heat are applied to the web to form the treated region. When heat and pressure are applied to the web by means of a hot press, the pressure may be relatively low. Preferably, the pressure which is applied to the web when forming the treated region is 60 kPa or more and 1500 kPa or less; more preferably 120 kPa or more and 900 kPa or less, even more preferably 170 kPa or more and 600 kPa or less.

If the laminate is manufactured in a stop-and-go process, the laminate can still be manufactured using a hot press as described above, for example. In this case, the substrate and the web may be supplied to the hot press by unwinding the substrate from a roll and by unwinding the web from a roll. While heat and pressure are applied to the web by means of the hot press, the conveying of the substrate and the web from the rolls to the hot press is stopped. After heat and pressure have been applied to the web, the substrate and the web are further conveyed, and heat and pressure can be applied to a further region of the web.

If the laminate is manufactured in a continuous process, the laminate can be manufactured by means of a calender, for example. When heat is applied to the web by means of a calender, the release surface is preferably formed on the surface of a heated nip roller of a pair of nip rollers. By using a release surface, unwanted sticking of the web to the nip roller can be prevented. If the laminate is manufactured by means of a calender, the substrate and the web may be supplied to the calender by unwinding the substrate from a roll and by unwinding the web from a roll. Generally, three different types of calenders may be used. As a first example, a calender may be used in which the substrate and the web are passed between a pair of nip rollers of which preferably one has a harndess higher than the hardness of the other and which apply a pressure or linear load onto the web and the substrate. In this case, the linear load which is applied to the web by the pair of nip rollers when forming the treated region is 150 kN/m or less, preferably 100 kN/m or less, more preferably 50 kN/m or less, even more preferably 30 kN/m or less and most preferably 20 kN/m or less but preferably no less than 100 kN/m, more preferably no less than 15 kN/m. As a second example, a calender may be used which provides a temperature gradient in the passing substrate and web, as described below. Also in this case, the linear load which is applied to the web by the pair of nip rollers when forming the treated region is 150 kN/m or less, preferably 100 kN/m or less, more preferably 50 kN/m or less, even more preferably 30 kN/m or less and most preferably 20 kN/m or less but preferably no less than 10 kN/m, more preferably no less than 15 kN/m. As a third example, a belt-calender system may be used in which the substrate and the web are passed between one nip roller and a belt. In this case, the nip roller has a comparatively high hardness, and the belt may be made of metal, fabric or latex. In this case, the linear load which is applied to the web by the nip roller and the belt when forming the treated region is 30 kN/m or less, preferably 20 kN/m or less, more preferably 10 kN/m or less and even more preferably 5 kN/m or less.

As described further above, it was surprisingly found that the speed at which the web is heated or cooled has an influence on whether the web's transparency can be increased to a desired level without causing the fibrous web to shrink or to get holes or cracks. The speed at which the web is heated or cooled can be adjusted by various measures, depending on the way the laminate is produced. For example, if the laminate is produced in a discontinuous process using a hot press, the speed at which the web is heated may be controlled by adjusting the temperature of the heated surface of the hot press and by adjusting the contact time of that surface and the web. Alternatively, the speed may be controlled by varying the temperature of the heated surface of the hot press during the contact time instead of heating the heated surface of the hot press to a constant temperature. As another example, if the laminate is produced in a continuous process using a calender, a plurality of pairs of nip rollers may be used and the substrate and the web are passed successively through each of the pairs of nip rollers. In each pair of the plurality of nip rollers, at least one nip roller may be heated. By heating the heated roller of a first pair of nip rollers to a temperature which is higher or lower than the temperature of the heated roller of a second pair of nip rollers, a temperature gradient in the substrate and the web along the conveying direction of the substrate and the web can be reached and the speed at which the web is heated or cooled can be adjusted. Alternatively, if the laminate is produced in a continuous process using a calender only one pair of nip rollers may be used of which at least one is heated. By arranging additional heaters such as infrared heaters or hot air blowers before or after the pair of nip rollers, the speed at which the web is heated or at which it cools down may be adjusted.

In the process of manufacturing a heat-sealable laminate, preferably the heat-sealable laminate described above, it may be generally preferred that after applying heat to the web, the web is held under tension to prevent shrinkage of the web. In other words, the edges of the web to which heat is applied can be held in place after the application of heat so that the web does not shrink when it cools. It may be preferable to keep the web under tension and/or hold its edges also during the application of heat. It may also be preferred that the web is held under tension until the web has cooled from the heating temperature to essentially room temperature. The web can be held under tension by various means. If a hot press is used to apply heat to the web, the web can be held under tension by applying an appropriate pressure to the web by means of the hot press. If a calender is used to apply heat to the web, the web can be held under tension by arranging or controlling the rollers accordingly or by providing additional deflection means or guide means.

The laminate of the present disclosure and the method of producing a laminate of the present disclosure is particularly advantageous when used for the fabrication of packaging for foods and beverages, such as in beverage cartons, tea bags, of packaging for loose fruit such as berries, but also of the packaging of products such as sports equipment or similar products. For example, the laminate can be used to make various kinds of packaging with tailored properties to serve different requirements, especially regarding a high transparency, a controlled air and/or gas permeability or air and/or gas tightness, a heat-sealability, some patterns, and a minimal mechanical resistance.

## Claims

1. A heat sealable laminate comprising:
a substrate comprising cellulose fibers, preferably a paper, and
a fibrous web comprising thermoplastic polymer fibers; wherein
the web is arranged on the substrate, and
in at least one treated region of the web, the web has been heated and compressed; wherein
the treated region of the web has a void ratio of 10 % or more and 80 % or less, preferably of 20 % or more and 75 % or less, more preferably of 30 % or more and 70 % or less.

2. The heat sealable laminate according to claim 1, wherein
a proportion of thermoplastic polymer fibers by weight of all fibers of the web is at least 80 %, preferably at least 90 %, more preferably at least 99 %.

3. The heat sealable laminate according to claim 1 or 2, wherein the thermoplastic polymer fibers are thermoplastic bio-sourced polymer fibers, which are preferably one or more of Polylactic Acid (PLA) fibers, Polyhydroxyalkanoate (PHA) fibers and Polyhydroxybutyrate (PHB) fibers.

4. The heat sealable laminate according to any one of claims 1 to 3, wherein
the web is a non-woven web, preferably a spunbond non-woven web.

5. The heat sealable laminate according to any one of claims 1 to 4, further comprising:
an adhesive or adhesion promoter disposed between the web and the substrate.

6. The heat sealable laminate according to any one of claims 1 to 5, wherein
the substrate has a transparency of at least 50 %, preferably at least 55 %, more preferably at least 60 %, even more preferably of at least 70 %, still more preferably of at least 75 %, most preferably of at least 80 %.

7. The heat sealable laminate according to any one of claims 1 to 6, wherein
in a region of the laminate in which the treated region of the web and the substrate overlap, the laminate has a transparency of at least 50 %, preferably at least 55 %, more preferably at least 60 %, even more preferably at least 70 %, still more preferably at least 75 %, most preferably at least 80 %.

8. The heat sealable laminate according to claim 7, wherein
said region of the laminate in which the treated region of the web and the substrate overlap is a contiguous area that has a size of at least 0.5 cm², preferably at least 1 cm², more preferably at least 2 cm², even more preferably at least 5 cm².

9. A method of producing a heat sealable laminate, preferably the heat sealable laminate according to any one of claims 1 to 8, the method comprising:
preparing a substrate comprising cellulose fibers, preferably a paper,
preparing a fibrous web comprising thermoplastic polymer fibers, the web preferably being a non-woven web, more preferably being a spunbond non-woven web,
placing the web on the substrate, and
applying heat and pressure to the web;
wherein heat and pressure are applied to the web, so as to increase the transparency of the web.

10. The method according to claim 9, wherein
a proportion of thermoplastic polymer fibers by weight of all fibers of the web is 80 % or more, preferably 90 % or more, more preferably 99 % or more, and
wherein optionally, the thermoplastic polymer fibers are thermoplastic bio-sourced polymer fibers, which are preferably one or more of Polylactic Acid (PLA) fibers, Polyhydroxyalkanoate (PHA) fibers and Polyhydroxybutyrate (PHB) fibers.

11. The method according to claim 9 or 10, wherein
by applying the heat and the pressure to the web, the web is fused to the substrate; and/or
the method further comprises attaching the web to the substrate by use of an adhesive or an adhesion promoter.

12. The method according to any one of claims 9 to 11, wherein
the heat is applied only from one side of the web; and/or
the heat is applied by means of a hot press or a calender or an ultrasonic horn.

13. The method according to any one of claims 9 to 12, wherein
when applying the heat to the web, the web is heated from ambient temperature to a heating temperature within a heating time period of 0.5 seconds or more and 12 seconds or less, preferably of 1 second or more and 6 seconds or less; and/or
the method further comprises cooling the web, wherein the web is cooled from a heating temperature to ambient temperature within a cooling time period of 0.5 seconds or more and 120 seconds or less, preferably of 5 seconds or more and 100 seconds or less;
wherein the heating temperature is at least as high as a melting temperature of the thermoplastic polymer fibers, preferably at least 5 °C or more but not more than 20 °C above the melting temperature, more preferably at least 10 °C or more but not more than 15 °C above the melting temperature.

14. The method according to any one of claims 9 to 13, further comprising
bringing the web in contact with a release surface having a non-stick coating prior to applying heat and pressure to the web, the non-stick coating preferably comprising Polytetrafluoroethylene (PTFE) and/or silicone.

15. Use of a laminate according to any one of claims 1 to 8 for the fabrication of a packaging.
